(19) Europäisches Patentamt
European Patent Office
Office européen des brevets

(11) EP 2 174 980 B2

(12) NEW EUROPEAN PATENT SPECIFICATION
After opposition procedure

(45) Date of publication and mention of the opposition decision:
**24.10.2018 Bulletin 2018/43**

(45) Mention of the grant of the patent:
**15.07.2015 Bulletin 2015/29**

(21) Application number: **08017556.5**

(22) Date of filing: **07.10.2008**

(51) Int Cl.:
***C08L 23/12*** *(2006.01)* *C08L 23/16* *(2006.01)*

(54) **High flowable heterophasic polypropylene**

Heterophasisches Polypropylen von hoher Flüssigkeit

Polypropylène hétérophasique hautement fluide

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**14.04.2010 Bulletin 2010/15**

(73) Proprietor: **Borealis AG**
**1220 Vienna (AT)**

(72) Inventors:
- **Doshev, Petar**
  **4040 Linz (AT)**
- **Kona, Balakantha rao**
  **Abu Dhabi (AE)**
- **Bernreitner, Klaus**
  **4010 Linz (AT)**
- **Grein, Christelle**
  **4020 Linz (AT)**

(74) Representative: **Kador & Partner PartG mbB**
**Corneliusstraße 15**
**80469 München (DE)**

(56) References cited:
**EP-A- 0 790 262** **EP-A- 1 452 630**
**EP-A- 1 935 938** **EP-A1- 1 935 938**



Printed by Jouve, 75001 PARIS (FR)

## Description

The present invention relates to a high flowable heterophasic polypropylene resin comprising a propylene homo- or copolymer matrix and an ethylene-propylene rubber phase dispersed within the matrix.

Well-known polypropylenes of commerce are particularly isotactic, semicrystalline, thermoplastic polymer materials. One of the main application areas of polypropylene is to be found in injection molding of thin-wall articles. Typical examples include plastics cups, pales and small containers mainly intended for food packaging. In order to be suitable for thin-wall injection molding application, the polypropylene should demonstrate excellent processability/flowablity, normally expressed by high melt flow rate (MFR), i.e. low average molecular weight. However, those polypropylenes exhibit brittle behaviour under impact loading especially at low temperatures.

It has been suggested by EP 1 354 901 and EP 1 659 151 to add high amounts of impact modifiers such as elastomeric ethylene-propylene copolymers to high flowable polypropylenes for improving the impact properties. However this has an adverse effect on flowability, processability, stiffness and hexane extractables. Hexane extractability has become an important concern in the field of food packaging particularly when the relative content of fat is above 1 wt.-%.

EP 1659151 discloses a polypropylene composition having an MFR above 8 g/10 min comprising a propylene matrix A) having an intrinsic viscosity IVA 1.00 - 2.20 dl/g and an elastomeric component including two components B) and C), which differ at least to their intrinsic viscosity.

WO 2003/076510 discloses a polypropylene composition having a bimodal rubber part and low flowability. The bimodality is achieved by melt mixing of the different rubbers.

EP-A-1935938 discloses heterophasic high melt flow composition of propylene homopolymer matrix and ethylene propylene xylene soluble dispersed phase.

EP-A-790262 disclosesheterophasic polypropylene composition of with high melt flow rate homopolymer part and rubber phase.

EP-A-2014714 discloses heterophasic compositions.

EP-A-1452630 discloses a heterophasic composition with an ethylene-propylene copolymer part with a glass transition temperature of -42 - -30°C.

Numerous documents have suggested to apply vis-breaking. However, vis-breaking is not an acceptable solution as it negatively affects the stiffness especially of molded articles and causes impurities within the film or molded article in the form of volatiles.

It is object of the present invention to provide an unmodified polypropylene composition that shows an excellent balance of high flowability, impact properties and low hexane extractability. It is a further object to provide a polypropylene composition obtainable by a multiple reaction stage process having the above mentioned unique balance.

The present invention is based on the inventive concept that the above mentioned balance of high flowability, impact properties and low hexane extractability can be significantly improved by a heterophasic composition comprising a matrix and a dispersed phase, the dispersed phase being relatively propylene rich and having a relatively high glass transition temperature as measured by DSC in the range of -42 to -30 °C.

The present invention thus provides a heterophasic polypropylene resin having an MFR (2.16 kg, 230°C) of more than 40 g/10 min, determined according to ISO 1133 comprising

a propylene homo- or copolymer matrix (A) and an ethylene-propylene rubber phase (B) dispersed within the matrix, wherein the heterophasic polypropylene resin has

a fraction insoluble in p-xylene at 25°C (XCU) with an intrinsic viscosity of 1.2 dl/g or less, determined according to DIN EN ISO 1628-1 and -3, the fraction insoluble in p-xylene at 25°C (XCU) being composed of propylene monomer units in an amount of at least 95 wt.-%, and

a fraction soluble in p-xylene at 25°C (XCS),

having an intrinsic viscosity of 2.3 to 3.5 dl/g, determined according to DIN EN ISO 1628-1 and -3 and being composed of propylene monomer units in an amount of 50 wt.-% or more, and having a glass transition temperature Tg as measured by DSC according to ISO 11357-2:1999 in the range of - 42 to - 30 °C.

The present invention further provides a heterophasic polypropylene resin as above,

whereby an injection moulded specimen of 80x10x4mm3 consisting of the heterophasic polypropylene resin has a Charpy notched impact strength (Charpy NIS) at +23°C of at least 5.5 kJ/$m^2$, determined according to ISO 179 1 eA and whereby a cast film specimen consisting of the heterophasic polypropylene resin and having a thickness of 100 micro meter and a dimension of 2.5 x 2.5 cm has an n-hexane extractability according to FDA 117, 1520 of below 6 wt.-%.

It has surprisingly been found that the inventive heterophasic polypropylene resins show a high flowability, good impact properties especially at low temperatures and at the same time extremely low hexane extractables. It has further surprisingly been found that the heterophasic polypropylene resin can be made into ultra thin wall articles by injection moulding avoiding sticking to the mould and uneven surface of the resulting article.

The term "polypropylene" denotes a propylene homo- or copolymer or a mixture of such propylene homo- or copolymers.

The term "homo- or copolymer matrix" denotes the material which is insoluble in p-xylene under the conditions described below.

The term "ethylene-propylene rubber phase" denotes the material which is dispersed in the matrix and is soluble in p-xylene under the conditions described below.

The term heterophasic polypropylene composition denotes a material consisting of the inventive heterophasic polypropylene resin and at least one nucleating agent and/or at least one additive and/or at least one modifier.

The term ethylene-propylene rubber denotes a substantially amorphous ethylene-propylene copolymer being soluble in cold p-xylene and having a glass transition temperature between -10 to -70°C.

Component (A) may consist of a single propylene homo- or copolymer, but (A) may also comprise a mixture of different propylene homo- or copolymers. This also applies for all preferred embodiments of component (A).

In a preferred embodiment, the resin consists of components (A) and (B). In a further preferred embodiment, the resin consists of component (A) and (B), whereby component (B) consists of two insitu-blended subfractions (a) and (b).

The fraction insoluble in p-xylene at 25°C (XCU) is meant to be the fraction of the polypropylene resin that is not soluble in p-xylene at 25°C and a pressure of 1013 hPa representing for the most part isotactic propylene homo- or copolymer.

The XCU fraction of the present invention has an intrinsic viscosity of 1.2 dl/g or less, preferably 0.1 to 1.2 dl/g, more preferably 0.3 to 1.1 dl/g, still more preferably 0.5 to 1.1 dl/g, most preferably 0.6 to 1.0 dl/g, determined according to DIN EN ISO 1628-1 and -3.

The propylene monomer units in the XCU fraction preferably show a statistical distribution of at least 50%, more preferably at least 60% of the ethylene monomer units in the XCU fraction.

It is further preferred that the XCU fraction has a weight average molecular weight $M_w$ of 50 to 200 kg/mol, more preferably 70 to 190 kg/mol, still more preferably 80 to 180 kg/mol, most preferably 90 to 170 kg/mol, and a number average molecular weight $M_n$ of 25 to 100 kg/mol, more preferably of 30 to 90 kg/mol, most preferably of 35 to 85 kg/mol, determined by GPC according to ISO 16014-1, and 4.

In a preferred embodiment the XCU fraction is present in an amount of 60 to 95 wt%, more preferably 70 to 90 wt%, still more preferably 75 to 88 wt%, most preferably 78 to 84 wt% of the heterophasic polypropylene resin.

The fraction soluble in p-xylene (XCS) is denoted the fraction of the polypropylene resin that is soluble in p-xylene at 25°C and a pressure of 1013 hPa representing for the most part amorphous ethylene-propylene copolymer.

The XCS fraction according to the invention preferably comprises two sub-fractions (a) and (b). Preferably the XCS fraction according to the invention consists of two sub-fractions (a) and (b). Even more preferably subfractions (a) and (b) are in-situ blended.

In a preferred embodiment the XCS fraction is present in an amount of 5 to 40 wt%, more preferably 10 to 30 wt%, still more preferably 12 to 25 wt%, most preferably 16 to 25 wt% of the heterophasic polypropylene resin.

The XCS fraction comprising two sub-fractions (a) and (b) according to the present invention has a total intrinsic viscosity of 2.3 to 3.0 dl/g and most preferably 2.3 to 2.8 dl/g determined according to DIN EN ISO 1628-1 and -3.

The XCS-fraction preferably is composed of propylene monomer units in an amount of 50 wt% or more. Even more preferably, the XCS-fraction is composed of propylene monomer units in an amount of 55 wt% or more, most preferably 60 wt% or more. The propylene monomer units in the XCS-fraction (a) preferably show a statistical distribution.

The XCS-fraction preferably has a glass transition temperature of -42 to - 30°C, more preferably of -41 to -32°C and most preferably -40 to -35°C.

The inventive heterophasic polypropylene resin has a high melt flow rate.

The heterophasic polypropylene resin according to the invention has a melt flow rate MFR (2.16 kg, 230°C) of more than 40 g/10 min, preferably more than 75 g/10min, more preferably 85 to 500 g/10 min, even more preferably 90 to 300 g/10 min, most preferably 92 to 120 determined according to ISO 1133 thus indicating a high flowability of the polypropylene resin i.e. excellent processability.

In a preferred embodiment of the invention a specimen consisting of the heterophasic polypropylene resin preferably has a Charpy notched impact strength at +23°C of at least 5.5 kJ/$m^2$, more preferably at least 6.0 kJ/$m^2$, still more preferably at least 6.5 kJ/$m^2$, and most preferably at least 7.0 kJ/$m^2$.

Moreover a specimen consisting of the heterophasic polypropylene resin has a Charpy notched impact strength at -20°C of at least 3.0 kJ/$m^2$, more preferably at least 3.5 kJ/$m^2$, still more preferably at least 3.8 kJ/$m^2$, and most preferably at least 4.2 kJ/$m^2$.

Still further, a specimen consisting of the heterophasic polypropylene resin preferably has an instrumented falling weight impact at +23°C of at least 14 J, more preferably of at least 17 J, still more preferably of at least 19 J, most preferably of at least 21 J determined according to ISO 6603-2, and at 0°C of at least 8.0 J, more preferably at least 10.0 J, most preferably at least 12.0 J, determined according to ISO 6603-2 and at -20°C of at least 6.0 J, more preferably at least 8.0 J, most preferably at least 14 J, determined according to ISO 6603-2.

Such outstanding instrument falling weight impact properties and Charpy impact properties surprisingly can by

achieved by the present invention without deteriorating the n-hexane extractability.

It is preferred that the heterophasic polypropylene resin has low n-hexane extractability. Low n-hexane extractability means that a cast film specimen consisting of the heterophasic polypropylene resin and having a thickness of 100 micrometers and a dimension of 2.5 x 2.5 cm has an n-hexane extractability of below 6 wt.-%, preferably below 5.5 wt.-% and most preferably below 5.1 wt.-% as measured according to FDA 177, 1520.

The preferred high values for Charpy notched impact strength and instrumented falling weight impact indicate excellent impact properties of the polypropylene resin even at low temperatures. The low n-hexane extractability indicates broad applicability in the field of packaging, particularly packaging of food having a fat content of above 1 wt.-%.

It is preferred that the polypropylene resin has a melting temperature $T_m$ of higher than 150°C, more preferably higher than 155°C, most preferably higher than 160°C, as determined by differential scanning calorimetry (DSC).

Further, it is preferred that the polypropylene resin has a crystallisation temperature $T_c$ of 126 to 138°C, preferably of 128 to 136°C, most preferably of 130 to 135°C, as determined by DSC.

It is further preferred that the heterophasic polypropylene resin is made by in-situ blending and is not formed by melt mixing. Melt mixing is merely carried out to incorporate nucleating agents and/or additives and/or modifiers.

The heterophasic polypropylene resin preferably is obtainable by a multistage process. Multistage processes include also bulk/gas phase reactors known as multizone gas phase reactors.

In a preferred embodiment the heterophasic polypropylene resin is obtained by a triple stage reactor process, whereby the first reactor is a bulk reactor operated under conditions to produce a propylene homo- or copolymer (A) being composed of propylene monomer units in an amount of at least 95 mol%, and an MFR (2.16 kg, 230°C) of more than 270 g/10 min, and a xylene cold solubility of 3.0 wt.% or less. Preferably, in the process for producing the heterophasic polypropylene the bulk reactor (first reaction stage) is operated under the following conditions.

The temperature is within the range of 40 °C to 110 °C, preferably between 60 °C and 100 °C, most preferably 70 to 90 °C. The pressure preferably is within the range of 20 bar to 80 bar, preferably between 30 bar to 60 bar. The control of the molecular weight of the material obtained in the first reaction stage is preferably achieved by hydrogen addition. The bulk reactor preferably is a loop reactor.

Then the obtained product from the bulk reactor is fed to a first gas phase reactor. This feed is preferably done without any degassing step. This first gas phase reactor is preferably operated under the following conditions. The temperature preferably is between 70 to 85°C, more preferably 70 to 80°C and most preferably 72 to 78°C. The pressure preferably is 1500 to 2000 kPa, even more preferably 1600 to 1900 kPa and most preferably 1650-1800 kPa. The $H_2/C_3$ ratio preferably is 80 to 120 mol/kmol, even more preferably is 85 to 110 mol/kmol, and most preferably 85 to 95 mol/kmol. The $C_2/C_3$ ratio preferably is 300 to 400 mol/kmol, more preferably is 320 to 380 mol/kmol, and most preferably 330 to 370 mol/kmol.

The obtained product from said first gas phase reactor is then fed to a second gas phase reactor. This feed preferably includes a degassing step. This second gas phase reactor is operated under conditions to produce the final heterophasic resin.

Preferred reaction conditions are provided in the following. The reaction temperature differs from temperature in first gas reactor $\pm$ 10°C. The pressure preferably is in the range of 1800 to 2300 kPa, more preferably in the range of 1850 to 2250 kPa, and most preferably in the range of 1860 to 2000 kPa. The $C_2/C_3$ ratio preferably is in the range of 800 to 1200 mol/kmol, preferably form 850 to 1150 mol/kmol, most preferably from 1000 to 1130 mol/kmol. The $H_2/C_2$ ratio preferably is in the range of 20 to 80, preferably 40 to 60 mol/kmol

Optionally, the process may also comprise a pre-polymerisation step in a manner known in the field and which may precede the first polymerisation stage.

The process is preferably a continuous process.

The average residence time can vary in the three reaction stages. In one embodiment of the process for producing the propylene polymer the residence time in bulk reactor, preferably in a loop reactor, is in the range 0.5 to 5 hours, e.g. 0.5 to 2 hours.

The residence time in the first gas phase reactor will generally be 1/2 to 4 hours, preferably 1 to 2 hours.

The residence time in the second gas phase reactor will generally be 1 to 5 hours.

If desired, the polymerization may be effected in a known manner under supercritical conditions in the bulk, preferably loop reactor, and/or as a condensed mode in the gas phase reactor.

It is preferred that the catalyst for the production of the heterophasic polypropylene is not a single site catalyst as the fine tuning of the molecular weight distribution is not easily possible which may deteriorate particularly the instrument falling weight properties.

The polypropylene resin according to this invention is preferably produced by a ZN catalyst system comprising an external donor.

Preferably, the ZN catalyst system has a Al/Ti ratio of 200 or higher, even more preferably 220-400, most preferably 230-300.

Preferably, the ZN catalyst system has an Al/donor ratio of below 55, more preferably 30-55, most preferably

45 to 55.

Additionally, the present invention is related to a heterophasic polypropylene composition comprising the inventive heterophasic polypropylene resin and a least one nucleating agent in an amount of 0.1 to 1000 ppm and/or at least one additive in an amount of up to 1 wt% and/or at least one modifier in an amount of up to 10 wt% with respect to the total heterophasic polypropylene composition. The nucleating agent and/or modifiers and/or additives may be included during the polymerisation process or after the polymerisation by melt mixing. Suitable modifiers include other thermoplastics like polyethylene homo-or copolymers, poly-1-butene, poly-4-methylpentene-1 and/or thermoplastic elastomers like ethylene-propylene rubber or styrene elastomers as well as mineral fillers like talc or calcium carbonate. It is preferred that the modifiers are selected from the group of polyethylene homo- or copolymers having a comonomer content, i.e. composed of structural units other than C2, of below 5 mol%. Suitable additives include stabilizers, lubricants, pigments and foaming agents.

The heterophasic polypropylene composition according to the present invention is preferably nucleated with a polymeric nucleating agent. More preferably the nucleation agent is a polymer composed of vinyl units according to formula (I):

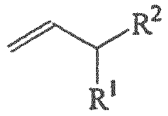

(I)

A polymeric nucleating agent composed of vinyl compound units may be a homopolymer of a vinyl compound or a copolymer of different vinyl compounds. Preferably the polymeric nucleating agent is a homopolymer of a vinyl compound according to formula (I).

In formula (I) $R^1$ and $R^2$, form an optionally substituted, fused ring system or saturated, unsaturated or aromatic ring, wherein said ring system or ring comprises 4 to 20 carbon atoms (e.g. 5 to 12 carbon atoms) or $R^1$ and $R^2$ independently represent a linear or branched $C_{4-30}$ alkane, a $C_{4-20}$ cycloalkane or a $C_{4-20}$ aromatic ring.

Preferably $R^1$ and $R^2$, together with the carbon atom they are attached to, form an optionally substituted, optionally $C_{1-2}$ bridged, 5 or 6 membered saturated, unsaturated or aromatic ring or $R^1$ and $R^2$ independently represent a $C_{1-4}$ alkyl group.

In further preferred compounds of formula (I), $R^1$ and $R^2$, together with the carbon atom they are attached to, form a 6 membered ring. Still more preferably $R^1$ and $R^2$, together with the carbon atom they are attached to, form a non-aromatic ring (for example: a vinyl cycloalkane). In particularly preferred compounds the ring formed by $R^1$ and $R^2$, together with the carbon atom they are attached to, is unsubstituted.

Preferred representative examples of vinyl compounds which may be present in the polymeric nucleating agent include vinyl cyclohexane, vinyl cyclopentane, vinyl-2-methyl cyclohexane, 3-methyl-1-pentene, 4-methyl-1-pentene, 3-methyl-1-butene, 3-ethyl-1-hexene or a mixture thereof. Vinyl cyclohexane is a particularly preferred vinyl compound.

Polymeric nucleating agents may be present in the compositions used in the present invention in amounts of greater than 0.1 ppm, e.g. from about 0.1 to 1000 ppm based on the weight of the total composition. More preferably polymeric nucleating agents may be added to the compositions in amounts (based on total weight of the composition) of greater than 0.5 ppm, still more preferably in amounts of 1 to 500 ppm, especially preferably 2 to 100 ppm, e.g. 3 to 50 ppm.

Further, the present invention relates to articles comprising the heterophasic polypropylene resin or the heterophasic polypropylene composition according to the invention produced by any common conversion process suitable for thermoplastic polymers like injection moulding, extrusion blow moulding, injection stretch blow moulding or cast film extrusion. The articles preferably are thin-walled articles having a wall thickness of 300 micro meter to 2 mm. Even more preferably the thin-walled articles have a wall thickness of 300 micro meter to 900 micro meter.

Still further, the present invention relates to the use of an ethylene propylene copolymer having a Tg as measured, by DSC according to ISO 11357-2: 1999 in the range of -42°C to -30°C for lowering the n-hexane extractability of heterophasic polypropylene.

In the following, the present invention is described by way of examples.

**Examples:**

1. Methods

a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230 °C and a load of 2.16 kg.

b) Xylene Soluble Fraction

The xylene soluble fraction (XCS) as defined and described in the present invention is determined as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 ± 0.5 °C. The solution was filtered with filter paper into two 100 ml flasks. The solution from the first 100 ml vessel was evaporated in nitrogen flow and the residue dried under vacuum at 90 °C until constant weight is reached. The xylene soluble fraction (percent) can then be determined as follows:

$$XCS\% = (100 \times m_1 \times v_0)/(m_0 \times v_1),$$

wherein $m_0$ designates the initial polymer amount (grams), $m_1$ defines the weight of residue (grams), $v_0$ defines the initial volume (milliliter) and $v_1$ defines the volume of the analysed sample (milliliter). The fraction insoluble in p-xylene at 25°C (XCU) is then equal to 100% - XCS%.

c) Intrinsic Viscosity

The intrinsic viscosity (IV) value increases with the molecular weight of a polymer. The intrinsic viscosity of the XCU and the XCS fraction is measured in decalin at 135°C according to DIN EN ISO 1628-1 and -3.

d) Weight Average Molecular Weight and MWD

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 ml/min. 216.5 μl of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 ml (at 160 °C) of stabilized TCB (same as mobile phase) and keeping for 3 hours with continuous shaking prior sampling in into the GPC instrument.

In case of PP the constants are: K: 19 $\times 10^{-3}$ ml/g and a: 0.725 for PP

e) $^{13}C$ NMR Measurement

The $^{13}C$ NMR measurements are performed with Varian Gemini 2000 300 .MHz spectrometer operating at 125°C. The material is dissolved with a mixture of 1,2,4 trichlorobenzene and benzene in a weight ratio of 80/20. the acquisition time is 2 s, the acquisition delay is 8 s.

From the spectra the triad and dyad distributions and the ethylene content are calculated. Further, the assignment of the peaks is performed according to Randall, J. C., A Review of High Resolution Liquid 13Carbon Nuclear Magnetic Resonance Characterization of Ethylene-Based Polymers, Macromol Chem Phys C29 (1989) 201-317.

f) Melting and crystallisation temperature

The melting and crystallisation temperature $T_m$ and $T_c$ are determined according to ISO 11357-1, -2 and -3 with a TA-Instruments 2920 Dual-Cell with RSC refrigeration apparatus and data station. A heating and cooling rate of 10 °C/min is applied in a heat / cool / heat cycle between +23 and +210°C, the crystallisation temperature $T_c$ being determined in the cooling step and the $T_m$ melting temperature being determined in the second heating step.

g) Glass transition temperature

The glass transition temperature (Tg) of the xylene cold soluble fractions (XCS) was determined by differential scanning calorimetry (DSC, in accordance with ISO 11357-2:1999) using a Perkin Elmer HPer DSC apparatus. The samples were first tempered at - 55 °C for 15 minutes and than the DSC traces were taken at a rate of 20 °C/min. The $T_g$ of the samples were determined from the midpoint of the transitions.

h) Charpy Notched Impact Strength

Charpy impact strength was determined according to ISO 179-1eA:2000 on V-notched samples of 80x10x4 $mm^3$ at 23 °C (Charpy impact strength (23°C)), 0°C (Charpy impact strength (0°C)) and -20 °C (Charpy impact strength (-20°C)). When not otherwise stated a standard impact velocity of 2.9 m/s was used.

The test specimens were prepared by injection moulding using an IM V 60 TECH machinery in line with ISO 1872-2. The melt temperature was 200 °C and the mold temperature was 40 °C.

i) Instrumented Falling Weight Impact

The instrumented falling weight impact is determined according to ISO 6603-2 with a velocity of 4.4 m/s on 60x60x2 $mm^3$ plates at +23°C, 0°C and -20°C specimen prepared by injection moulding.

j) Tensile Modulus

Tensile strength properties were determined according to ISO 527-2. on injection moulded specimens of type F3/4 prepared in accordance with EN ISO 1873-2. The tensile modulus (in MPa) was determined at 23 °C temperature with an elongation rate of 1 mm/min.

k) n-hexane extractability

The n-hexane extractability was determined according to FDA 177, 1520 by suspending in an excess of hexane a specimen of the polypropylene. The specimens prepared were cast film having a thickness of 100 micro meter, whereby the film was cut into squares of about 2.5 x 2.5 cm. The suspension was put in an autoclave at 50 °C for 2 hours. Then the n-hexane was removed by evaporation and the dried residue was weighed.

2. Compositions:

CATALYST

Ziegler-Natta catalysts have been used, i.e. TiCl4 supported on MgCl2 with triethylaluminum (TEA) as cocatalyst. Dicyclopentyldimethoxysilane (donor D) was used as external electron donor. The ratios of Al/Ti and Al/donor are given in Table 1.

Table 1:

| | Example 1 | Example 2 | Comparative Example 1 |
|---|---|---|---|
| Catalyst type | $TiCl_4$ supported on $MgCl_2$ with TEA as cocatalyst | | |
| Donor type | D | D | D |
| Al/Ti ratio (mol/mol) | 258 | 248 | 194 |
| Al/donor ratio (mol/mol) | 50 | 50 | 60 |
| Prepolymerisation Temperature (°C) | 30 | 30 | 30 |
| Pressure (kPa) | 5841 | 5843 | 5862 |
| Residence time (h) | 0.37 | 0.37 | 0.37 |
| Loop reactor Temperature (°C) | 85 | 85 | 93 |
| Pressure (kPa) | 5798 | 5803 | 5811 |
| H2/C3 ratio (mol/kmol) | 26.38 | 26.42 | 50.7 |
| Residence time (h) | 0.62 | 0.63 | 0.2 |
| Production rate (kg/h) | 40.4 | 40.8 | 32.4 |
| GPR 1 Temperature (°C) | 75 | 75 | 95 |
| Pressure (kPa) | 1750 | 1710 | 3000 |
| H2/C3 ratio (mol/kmol) | 91 | 89 | 146 |
| C2/C3 ratio (mol/kmol) | 350.72 | 350.54 | 0 |
| Residence time (h) | 1.53 | 1.39 | 2 |
| Production rate (kg/h) | 1.78 | 2.92 | 26.72 |
| GPR 2 Temperature (°C) | 80 | 80 | 85.03 |
| Pressure (kPa) | 1951 | 1874 | 2850 |
| C2/C3 ratio (mol/kmol) | 1089 | 1099 | 590 |
| H2/C2 ratio (mol/kmol) | 55 | 54 | 95 |
| Production rate (kg/h) | 7.4 | 8.4 | 11.5 |
| Catalyst type | $TiCl_4$ supported on $MgCl_2$ with TEA as cocatalyst | | |
| Additivation Irganox B225 (ppm) | 2000 | 2000 | 2000 |
| CaSt (ppm) | 500 | 500 | 500 |
| GMS 90 (ppm) | 4000 | 4000 | 4000 |
| Talc (ppm) | 8000 | 8000 | 8000 |

Comparative Example CE1 was a heterophasic polypropylene with a rubber having a Tg outside the desired

range. All three compositions were stabilized with a combination of Irganox B225 (Ciba Specialty Chemicals, Switzerland) and Calcium stearate (Faci, Italy), further equipped with an antistatic agent (glycerol monostearate GMS90, Faci, Italy) and nucleated with talc Tital 10 (Ankerpoort, The Netherlands).

The XCS fraction of the Examples Ex1, Ex2 have the following properties as listed in table 2:

Table 2: Analytical characterisation of XCS fraction.

| | E1 | E2 | CE1 |
|---|---|---|---|
| Amount / wt% | 26.9 | 19.3 | 17.8 |
| Mw / kg/mol | 200 | 190 | 200 |
| Mn / kg/mol | 57 | 59 | 65 |
| Mw/Mn | 3.5 | 3.2 | 3.1 |
| C3 content wt% | 65.9 | 66.7 | 60.4 |
| iV / dl/g | 2.3 | 2.4 | 2.5 |
| Tg / °C | -39 | -38 | -44 |

The properties of the inventive examples and the comparative example are compared in Table 3. It can be seen that the inventive examples show clear advantages both in flow and low temperature impact, particularly Charpy notched impact properties, and also in hexane extractables.

Table 3: Properties of inventive Examples Ex1 and Ex2 in comparison to Comparative Example CE1.

| | Ex1 | Ex2 | CE1 |
|---|---|---|---|
| MFR [g/10 min] | 108 | 94 | 70 |
| $T_m$ [°C] | 165 | 165 | 165 |
| $T_c$ [°C] | 132.4 | 132.4 | 131.9 |
| $T_g$ (XCU) [°C] | 0 | 0 | 0 |
| $T_g$ (XCS) [°C] | -39 | -38 | -44 |
| N-hexane wt.% (FDA) | 5.4 | 5.0 | 6.2 |
| Charpy NIS, +23°C [kJ/$m^2$] * | 7.8 | 6.4 | 4.4 |
| Charpy NIS, -20°C [kJ/$m^2$] * | 4.1 | 4.4 | 3.6 |
| IFWI, +23°C [J] | 21.6 | 14.2 | 16.2 |
| IFWI, 0°C [J] | 16.7 | 12.2 | 12.2 |
| IFWI, -20°C [J] | 16.9 | 8.8 | 10.4 |
| Tensile Modulus [MPa] | 1310 | 1340 | 1510 |
| Impact velocity 1.5 m/s | | | |

## Claims

1. Heterophasic polypropylene resin having an MFR (2.16 kg, 230°C) of more than 40 g/10 min, determined according to ISO 1133 comprising
a propylene homo- or copolymer matrix (A) and an ethylene-propylene rubber phase (B) dispersed within the matrix, wherein the heterophasic polypropylene resin has
a fraction insoluble in p-xylene at 25°C (XCU) with an intrinsic viscosity of 1.2 dl/g or less, determined according to DIN EN ISO 1628-1 and -3, the fraction insoluble in p-xylene at 25°C (XCU) being composed of propylene monomer units in an amount of at least 95 wt.-%, and
a fraction soluble in p-xylene at 25°C (XCS),
having an intrinsic viscosity of 2.3 to 3.0 dl/g, determined according to DIN EN ISO 1628-1 and -3 and being composed of propylene monomer units in an amount of 50 wt.-% or more, and having a glass transition temperature Tg as measured by DSC according to ISO 11357-2:1999 at a compression moulded sample consisting of the XCS fraction

in the range of - 42 to - 30 °C.

2. Heterophasic polypropylene resin according to claim 1,
whereby a injection moulded specimen of 80x10x4mm$^3$ consisting of the heterophasic polypropylene resin has a Charpy notched impact strength (Charpy NIS) at +23°C of at least 5.5 kJ/m$^2$, determined according to ISO 179 1eA and
whereby a cast film specimen consisting of the heterophasic polypropylene resin and having a thickness of 100 micro meter and a dimension of 2.5 x 2.5 cm has a n-hexane extractability according to FDA 117, 1520 of below 6 wt.-%.

3. Heterophasic polypropylene resin according to claim 1 or 2 wherein the XCU fraction has a weight average molecular weight $M_w$ of 50 to 200 kg/mol, measured by GPC according to ISO 16014-1, and 4.

4. Heterophasic polypropylene resin according to any of the preceding claims wherein the XCU fraction is present in an amount of 75 to 84 wt% of the heterophasic polypropylene resin.

5. Heterophasic polypropylene resin according to any of the preceding claims wherein the XCS fraction has an average molecular weight $M_w$ of 150 to 250 kg/mol, measured by GPC according to ISO 16014-1, and 4.

6. Heterophasic polypropylene resin according to any of the preceding claims wherein the XCS fraction is present in an amount of 16 to 25 wt.-% of the heterophasic polypropylene resin.

7. Heterophasic polypropylene resin according to any of the preceding claims wherein an injection moulded specimen consisting of the heterophasic polypropylene resin has an instrumented falling weight impact at +23°C of at least 12 J, determined according to ISO 6603-2.

8. Heterophasic polypropylene resin according to any of the preceding claims wherein an injection moulded specimen consisting of the heterophasic polypropylene has an instrumented falling weight impact at +0°C of at least 11 J, determined according to ISO 6603-2.

9. Heterophasic polypropylene resin according to any of the preceding claims wherein an injection moulded specimen consisting of the heterophasic polypropylene has an instrumented falling weight impact at - 20°C of at least 7 J, determined according to ISO 6603-2.

10. Heterophasic polypropylene resin according to any of the preceeding claims, wherein the tensile modulus measured according to ISO 527-2 on injection moulded specimens of type F3/4 prepared in accordance with EN ISO 1873-2 is 1100 MPa or higher.

11. Heterophasic polypropylene resin according to any of the preceding claim, obtainable by a triple stage reactor process, whereby
the first reactor is a loop reactor operated under conditions to produce a propylene homo- or copolymer (A) being composed of propylene monomer units in an amount of at least 95 wt.-%, and an MFR (2.16 kg, 230°C) of more than 270 g/10 min, and a xylene solubility of 3.0 wt.% or less,
the obtained product from the bulk reactor being fed to a first gas phase reactor
the first gas phase reactor being operated

at a temperature of 70 to 80 °C,
a pressure of 1500 to 2000 kPa,
a H2/C3 ratio of 80 to 120 mol/kmol, and
a C2/C3 ratio of 300 to 400 mol/kmol

the obtained product from the first gas phase reactor being subjected to a degassing step and then being fed to a second gas phase reactor,
the second gas phase reactor being operated

at a temperature differing from the temperature in the first gas phase reactor of +- 10 °C,
at a pressure of 1800 to 2300 kPa,
a C2/C3 ratio of 800 to 1200 mol/kmol,

a H2/C2 ratio of 40 to 80.

**12.** Heterophasic polypropylene resin according to any of the preceding claims being produced in the presence of a Ziegler-Natta catalyst system comprising an external donor and the Ziegler-Natta catalyst system optionally having a Al/donor ratio of below 55 and/or the Ziegler-Natta catalyst system optionally having a Al/Ti ratio of 200 or higher.

**13.** Heterophasic polypropylene composition consisting of
the heterophasic polypropylene resin according to any of the claims 1 to 12 and
at least one nucleating agent in an in an amount of 0.1 to 1000 ppm respect to the weight of the total heterophasic polypropylene composition,
and/or
at least one additive in an amount of up to 1 wt.-% with respect to the heterophasic polypropylene composition, and/or at least one modifier in an amount of up to 10 wt.-% with respect to the heterophasic polypropylene composition.

**14.** Heterophasic polypropylene composition according to claim 13, wherein the nucleating agent is a vinyl polymer, the vinyl polymer optionally being composed of vinyl units according to formula (I)

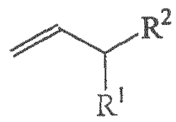

(I)

wherein $R^1$ and $R^2$, form an optionally substituted, fused ring system or a saturated, unsaturated or aromatic ring, or $R^1$ and $R^2$ independently represent a linear or branched $C_{4-30}$ alkane, a $C_{4-20}$ cycloalkane or a $C_{4-20}$ aromatic ring.

**15.** Article comprising the heterophasic polypropylene resin or heterophasic polypropylene composition according to any of the preceding claims.

## Patentansprüche

**1.** Heterophasisches Polypropylenharz, das einen MFR (2,16 kg, 230 °C) von mehr als 40 g/10 min aufweist, bestimmt gemäß ISO 1133, umfassend
eine Propylen-Homo- oder Copolymermatrix (A) und eine Ethylen-Propylen-Kautschukphase (B), die in der Matrix dispergiert ist,
wobei das heterophasische Polypropylenharz
eine Fraktion aufweist, die bei 25 °C in p-Xylol (XCU) unlöslich ist und die eine intrinsische Viskosität von 1,2 dl/g oder weniger aufweist, bestimmt gemäß DIN EN ISO 1628-1 und -3, wobei die Fraktion, die bei 25 °C in p-Xylol (XCU) unlöslich ist, mit einer Menge von mindestens 95 Gew.-% aus Propylenmonomereinheiten gebildet ist, und eine Fraktion aufweist, die bei 25 °C in p-Xylol (XCU) löslich ist,
wobei sie eine intrinsische Viskosität von 2,3 bis 3,0 dl/g aufweist, bestimmt gemäß DIN EN ISO 1628-1 und -3, sie mit einer Menge von 50 Gew.-% oder mehr aus Propylenmonomereinheiten gebildet ist und sie eine Glasübergangstemperatur Tg von -42 bis -30 °C aufweist, gemessen mittels DSC gemäß ISO 11357-2:1999 an einer formgepressten Probe, die aus der XCS-Fraktion besteht.

**2.** Heterophasisches Polypropylenharz nach Anspruch 1,
wobei ein spritzgegossener Prüfkörper mit 80 x 10 x 4 $mm^3$, der aus dem heterophasischen Polypropylenharz besteht, eine Charpy-Kerbschlagzähigkeit (Charpy NIS) bei +23 °C von mindestens 5,5 $kJ/m^2$ aufweist, bestimmt gemäß ISO 179 1eA,
und
wobei ein Gießfolienprüfkörper, der aus dem heterophasischen Polypropylenharz besteht und eine Dicke von 100 Mikrometer und eine Abmessung von 2,5 x 2,5 cm aufweist, eine n-Hexan-Extrahierbarkeit von unter 6 Gew.-% gemäß FDA 117, 1520 aufweist.

**3.** Heterophasisches Polypropylenharz nach Anspruch 1 oder 2, wobei die XCU-Fraktion ein Gewichtsmittel des Molekulargewichts $M_w$ von 50 bis 200 kg/mol aufweist, gemessen mittels GPC gemäß ISO 16014-1 und 4.

4. Heterophasisches Polypropylenharz nach einem der vorhergehenden Ansprüche, wobei die XCU-Fraktion mit einer Menge von 75 bis 84 Gew.-% des heterophasischen Polypropylenharzes vorliegt.

5. Heterophasisches Polypropylenharz nach einem der vorhergehenden Ansprüche, wobei die XCS-Fraktion ein mittleres Molekulargewicht $M_w$ von 150 bis 250 kg/mol aufweist, gemessen mittels GPC gemäß ISO 16014-1 und 4.

6. Heterophasisches Polypropylenharz nach einem der vorhergehenden Ansprüche, wobei die XCS-Fraktion mit einer Menge von 16 bis 25 Gew.-% des heterophasischen Polypropylenharzes vorliegt.

7. Heterophasisches Polypropylenharz nach einem der vorhergehenden Ansprüche, wobei ein spritzgegossener Prüfkörper, der aus dem heterophasischen Polypropylenharz besteht, einen instrumentierten Fallgewichteinschlag bei +23 °C von mindestens 12 J aufweist, bestimmt gemäß ISO 6603-2.

8. Heterophasisches Polypropylenharz nach einem der vorhergehenden Ansprüche, wobei ein spritzgegossener Prüfkörper, der aus dem heterophasischen Polypropylen besteht, einen instrumentierten Fallgewichteinschlag bei +0 °C von mindestens 11 J aufweist, bestimmt gemäß ISO 6603-2.

9. Heterophasisches Polypropylenharz nach einem der vorhergehenden Ansprüche, wobei ein spritzgegossener Prüfkörper, der aus dem heterophasischen Polypropylen besteht, einen instrumentierten Fallgewichteinschlag bei -20 °C von mindestens 7 J aufweist, bestimmt gemäß ISO 6603-2.

10. Heterophasisches Polypropylenharz nach einem der vorhergehenden Ansprüche, wobei das Zugmodul, gemessen gemäß ISO 527-2 an spritzgegossenen Prüfkörpern des Typs F3/4, hergestellt in Übereinstimmung mit EN ISO 1873-2, 1100 MPa oder mehr beträgt.

11. Heterophasisches Polypropylenharz nach einem der vorhergehenden Ansprüche, das durch ein dreistufiges Reaktorverfahren erhalten werden kann, wobei
der erste Reaktor ein Schlaufenreaktor ist, der unter Bedingungen betrieben wird, um ein Propylen-Homo- oder Copolymer (A), das mit einer Menge von mindestens 95 Gew.-% aus Propylenmonomereinheiten gebildet ist, mit einem MFR (2,16 kg, 230 °C) von mehr als 270 g/10 min und mit einer Xylollöslichkeit von 3,0 Gew.-% oder weniger herzustellen,
das erhaltene Produkt aus dem Bulk-Reaktor einem ersten Gasphasenreaktor zugeführt wird
der erste Gasphasenreaktor bei

einer Temperatur von 70 bis 80 °C,
einem Druck von 1500 bis 2000 kPa,
einem H2/C3-Verhältnis von 80 bis 120 mol/kmol, und
einem C2/C3-Verhältnis von 300 bis 400 mol/kmol betrieben wird

das erhaltene Produkt aus dem ersten Gasphasenreaktor einem Entgasungsschritt unterzogen wird und dann einem zweiten Gasphasenreaktor zugeführt wird
der zweite Gasphasenreaktor bei

einer Temperatur, die von der Temperatur in dem ersten Gasphasenreaktor um $\pm$ 10 °C abweicht,
einem Druck von 1800 bis 2300 kPa,
einem C2/C3-Verhältnis von 800 bis 1200 mol/kmol, und
einem H2/C2-Verhältnis von 40 bis 80 betrieben wird.

12. Heterophasisches Polypropylenharz nach einem der vorhergehenden Ansprüche, das in Gegenwart eines Ziegler-Natta-Katalysatorsysstems hergestellt wird, das einen externen Donor und das Ziegler-Natta-Katalysatorsystem, das optional ein Al/Donor-Verhältnis von unter 55 aufweist, und/oder das Ziegler-Natta-Katalysatorsystem, das optional ein Al/Ti-Verhältnis von 200 oder höher aufweist, umfasst.

13. Heterophasische Polypropylenzusammensetzung, bestehend aus

dem heterophasischen Polypropylenharz nach einem der Ansprüche 1 bis 12 und
mindestens einem Nukleierungsmittel mit einer Menge von 0,1 bis 1000 ppm, bezogen auf das Gewicht der gesamten heterophasischen Polypropylenzusammensetzung, und/oder

mindestens einen Zusatzstoff mit einer Menge von bis zu 1 Gew.-% in Bezug auf die die heterophasische Polypropylenzusammensetzung, und/oder
mindestens ein Modifiziermittel mit einer Menge von bis zu 10 Gew.-% in Bezug auf die heterophasische Polypropylenzusammensetzung.

**14.** Heterophasische Polypropylenzusammensetzung nach Anspruch 13, wobei das Nukleierungsmittel ein Vinylpolymer ist, wobei das Vinylpolymer optional aus Vinyleinheiten mit der folgenden Formel (I) gebildet ist:

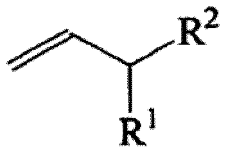

(I)

wobei

$R^1$ und $R^2$ ein optional substituiertes, fusioniertes Ringsystem oder einen gesättigten, ungesättigten oder aromatischen Ring bilden,
oder $R^1$ und $R^2$ unabhängig ein lineares oder verzweigtes $C_{4-30}$ Alkan, ein $C_{4-20}$ Cycloalkan oder einen $C_{4-20}$ aromatischen Ring repräsentieren.

**15.** Artikel, umfassend das heterophasische Polypropylenharz oder die heterophasische Polypropylenzusammensetzung nach einem der vorhergehenden Ansprüche.

## Revendications

**1.** Résine de polypropylène hétérophasique ayant un MFR (2,16 kg, 230 °C) de plus de 40 g/10 minutes, déterminé selon la norme ISO 1133, comprenant une matrice d'homo- ou copolymère de propylène (A) et une phase de caoutchouc d'éthylène-propylène (B) dispersée dans la matrice,
la résine de polypropylène hétérophasique ayant
une fraction insoluble dans le p-xylène à 25 °C (XCU) ayant une viscosité intrinsèque inférieure ou égale à 1,2 dl/g, déterminée selon les normes DIN EN ISO 1628-1 et -3, la fraction insoluble dans le p-xylène à 25 °C (XCU) se composant de motifs de monomère de propylène en une quantité d'au moins 95 % en poids, et
une fraction soluble dans le p-xylène à 25 °C (XCS) ayant une viscosité intrinsèque de 2,3 à 3,0 dl/g, déterminée selon les normes DIN EN ISO 1628-1 et -3 et se composant de motifs de monomère de propylène en une quantité supérieure ou égale à 50 % en poids, et ayant une température de transition vitreuse Tg, mesurée par DSC selon la norme ISO 11357-2:1999 pour un échantillon moulé par compression se composant de la fraction XCS dans la plage allant de -42 à -30 °C.

**2.** Résine de polypropylène hétérophasique selon la revendication 1, dans laquelle un échantillon moulé par injection de 80 x 10 x 4 $mm^3$ se composant de la résine de polypropylène hétérophasique a une résistance à l'impact sur éprouvette entaillée selon Charpy (Charpy NIS) à +23 °C d'au moins 5,5 $kJ/m^2$, déterminée selon la norme ISO 179 1eA, et
dans laquelle un échantillon de film coulé se composant de la résine de polypropylène hétérophasique et ayant une épaisseur de 100 $\mu$m et une dimension de 2,5 x 2,5 cm a une extractabilité dans le n-hexane selon la norme FDA 117, 1520 inférieure à 6 % en poids.

**3.** Résine de polypropylène hétérophasique selon la revendication 1 ou la revendication 2, dans laquelle la fraction XCU a un poids moléculaire moyen en masse $M_m$ de 50 à 200 kg/mol, mesuré par GPC selon les normes ISO 16014-1 et 4.

**4.** Résine de polypropylène hétérophasique selon l'une quelconque des revendications précédentes, dans laquelle la fraction XCU est présente en une quantité de 75 à 84 % en poids de la résine de polypropylène hétérophasique.

**5.** Résine de polypropylène hétérophasique selon l'une quelconque des revendications précédentes, dans laquelle la fraction XCS a un poids moléculaire moyen en masse $M_m$ de 150 à 250 kg/mol, mesurée par GPC selon les normes

ISO 16014-1 et 4.

6. Résine de polypropylène hétérophasique selon l'une quelconque des revendications précédentes, dans laquelle la fraction XCS est présente en une quantité de 16 à 25 % en poids de la résine de polypropylène hétérophasique.

7. Résine de polypropylène hétérophasique selon l'une quelconque des revendications précédentes, dans laquelle l'échantillon moulé par injection se composant de la résine de polypropylène hétérophasique a un impact par la chute d'une masse instrumentée à +23 °C d'au moins 12 J, déterminé selon la norme 6603-2.

8. Résine de polypropylène hétérophasique selon l'une quelconque des revendications précédentes, dans laquelle l'échantillon moulé par injection se composant de la résine de polypropylène hétérophasique a un impact par la chute d'une masse instrumentée à +0 °C d'au moins 11 J, déterminé selon la norme 6603-2.

9. Résine de polypropylène hétérophasique selon l'une quelconque des revendications précédentes, dans laquelle l'échantillon moulé par injection se composant de la résine de polypropylène hétérophasique a un impact par la chute d'une masse instrumentée à -20 °C d'au moins 7 J, déterminé selon la norme 6603-2.

10. Résine de polypropylène hétérophasique selon l'une quelconque des revendications précédentes, dans laquelle le module de traction mesuré selon la norme ISO 527-2 sur des échantillons moulés par injection de type F3/4 préparés selon la norme EN ISO 1873-2 est supérieur ou égal à 1100 MPa.

11. Résine de polypropylène hétérophasique selon l'une quelconque des revendications précédentes, pouvant être obtenue par un procédé dans trois réacteurs en phase dans lequel
le premier réacteur est un réacteur en boule fonctionnant dans des conditions pour produire un homo- ou copolymère de propylène (A) se composant de motifs de monomère de propylène en une quantité d'au moins 95 % en poids, et un MFR (2,16 kg, 230 °C) de plus de 270 g/10 minutes, et une solubilité dans le xylène inférieure ou égale à 3,0 % en poids,
le produit obtenu à partir du réacteur en vrac étant alimenté vers un premier réacteur en phase gazeuse,
le premier réacteur en phase gazeuse fonctionnant
à une température de 70 à 80 °C,
une pression de 1500 à 2000 kPa,
un rapport H2/C3 de 80 à 120 mol/kmol, et
un rapport C2/C3 de 300 à 400 mol/kmol,
le produit obtenu à partir du premier réacteur en phase gazeuse étant soumis à une étape de dégazage, puis étant alimenté vers un second réacteur en phase gazeuse,
le second réacteur en phase gazeuse fonctionnant
à une température différant de la température dans le premier réacteur en phase gazeuse de +/- 10 °C,
à une pression de 1800 à 2300 kPa,
un rapport C2/C3 de 800 à 1200 mol/kmol, et
un rapport H2/C2 de 40 à 80.

12. Résine de polypropylène hétérophasique selon l'une quelconque des revendications précédentes, qui est produite en présence d'un système catalytique de Ziegler-Natta comprenant un donneur externe et le système catalytique de Ziegler-Natta ayant facultativement un rapport Al/donneur inférieur à 55 et/ou le système catalytique de Ziegler-Natta ayant facultativement un rapport Al/Ti supérieur ou égal à 200.

13. Composition de polypropylène hétérophasique se composant de
la résine de polypropylène hétérophasique selon l'une quelconque des revendications 1 à 12, et
au moins un agent de nucléation en une quantité de 0,1 à 1000 ppm par rapport au poids de la composition de polypropylène hétérophasique totale, et/ou
au moins un additif en une quantité allant jusqu'à 1 % en poids par rapport au poids de la composition de polypropylène hétérophasique, et/ou
au moins un modificateur en une quantité allant jusqu'à 10 % en poids par rapport au poids de la composition de polypropylène hétérophasique.

14. Composition de polypropylène hétérophasique selon la revendication 13, dans laquelle l'agent de nucléation est un polymère vinylique, le polymère vinylique se composant facultativement de motifs vinyliques répondant à la formule (I)

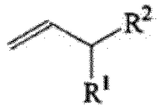

(I)

dans laquelle $R^1$ et $R^2$ forment un système cyclique condensé, facultativement substitué ou un cycle saturé, insaturé ou aromatique,
ou $R^1$ et $R^2$ représentent indépendamment un groupe alcane en $C_4$ à $C_{30}$ linéaire ou ramifié, un groupe cycloalcane en $C_4$ à $C_{20}$ ou un cycle aromatique en $C_4$ à $C_{20}$.

**15.** Article comprenant la résine de polypropylène hétérophasique ou la composition de polypropylène hétérophasique selon l'une quelconque des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1354901 A
- EP 1659151 A
- WO 2003076510 A
- EP 1935938 A
- EP 790262 A
- EP 2014714 A
- EP 1452630 A


### Non-patent literature cited in the description


- **RANDALL, J. C.** A Review of High Resolution Liquid 13Carbon Nuclear Magnetic Resonance Characterization of Ethylene-Based Polymers. *Macromol Chem Phys,* 1989, vol. C29, 201-317